# EUROPÄISCHE PATENTSCHRIFT

(11) **EP 1 749 439 B1**
(45) Veröffentlichungstag und Bekanntmachung des Hinweises auf die Patenterteilung: **24.10.2012**
(21) Anmeldenummer: 06014404.5
(22) Anmeldetag: 11.07.2006
(51) Int. Cl.: A01K 1/06, A01K 1/10

(54) **Fütterungseinheit**
Feeding unity
Râtelier

(30) Priorität: 03.08.2005 DE 102005036556
(43) Veröffentlichungstag der Anmeldung: 07.02.2007
(73) Patentinhaber: Texas Trading GmbH, 86949 Windach (DE)
(72) Erfinder: Riedel, Helmut, 86949 Windach (DE)
(74) Vertreter: Reinhardt, Markus

(56) Entgegenhaltungen:
- DE-U1- 20 007 481
- US-A- 5 337 699

## Beschreibung

Die vorliegende Erfindung betrifft eine Fütterungseinheit gemäß dem Oberbegriff des Patentanspruchs 1.

Futter, insbesondere Heu, wird Tieren wie Rindern, Pferden, Schafen, Ziegen und Wild meist in Fütterungseinheiten, auch Heuraufen genannt, angeboten.

Diese Fütterungseinheiten werden meistens industriell und aus Stahl hergestellt. Es gibt aber auch Konstruktionen aus Holz die dann meistens vom Tierhalter selbst angefertigt wurden.

Auf dem Markt sind zahlreiche verschiedene Konstruktionen bekannt. Eine Gemeinsamkeit ist immer vorhanden, eine Trennfläche zwischen Futtervorrat und dem Tier.

Die Trennfläche hat den Sinn das Futter vor Verschmutzung und Verteilung durch die Tiere zu schützen.

Diese Trennfläche kann in zwei Hauptgruppen unterteilt werden:
I. Die Trennfläche hat nur kleine Öffnungen, durch die das Tier nicht mit dem Kopf kann und das Futter meist Mithilfe der Zunge aufgenommen wird. Diese Variante wird verwendet, falls wenige Tiere zu versorgen sind, die außerdem noch reichlich Zeit zum Fressen haben.
II. Die Trennfläche hat Öffnungen, durch die das Tier seinen Kopf und Teile des Halses stecken kann, um so zum Futter gelangen zu können.

Weitere Unterscheidungsmerkmale von Fütterungseinheiten sind: mit Dach oder ohne Dach; mit Boden bzw. Futterwanne oder ohne Boden; die äußere Form der Heuraufe (rund, quadratisch, rechteckig usw.); und an einer Wand zu montieren oder freistehend.

Derartige Fütterungseinheiten sind beispielsweise aus der DE 196 45 264 oder der DE 200 07 481 bekannt. In der DE 196 45 264 ist eine gattungsgemäße Fütterungseinheit für Pferde beschrieben, die über ein Dach verfügt. Die Fütterungseinheit weist Abtrennungen auf, um die Tiere während des Fressens voneinander auf Distanz zu halten. Diese Abtrennungen sind in Form von Abgrenzungen vorgesehen, die im wesentlichen U- bzw. V-förmig ausgebildet sind, wobei der Scheitelpunkt der U- bzw. V-Form oben liegt und die beiden Schenkel auseinander geführt sind und unten in einer Basis befestigt sind. Die sich ergebenden V-förmigen Öffnungen, durch die die Tiere den Kopf stecken müssen, um zum Futter zu gelangen, sind dementsprechend oben breiter als unten.

Eine ähnliche Ausführung ist jeweils in der DE 200 07 481 oder GB 1 292 185 offenbart. Auch dort sind die Abgrenzungen, die die Abtrennung zwischen den einzelnen Öffnungen herstellen, aus im wesentlichen U-förmig gebogenen Rohren gebildet. Diese Abgrenzungen schaffen dadurch voneinander getrennte Fressplätze für die Tiere. Die Abgrenzungen werden oft auch Palisaden genannt.

Solche Fütterungseinheiten bzw. Heuraufen werden dort aufgestellt wo die Tiere sind, insbesondere im Freien, und mit Futter gefüllt. Die Tiere können durch die Öffnungen den Kopf stecken und das Futter aufnehmen.

Bei den bekannten Fütterungseinheiten hat es sich nun herausgestellt, dass insbesondere halbwüchsige Tiere, zum Beispiel Kälber, die körperlich noch klein sind, aber genetisch bedingt große Hörner haben (zum Beispiel die Rassen Salers und Highland Cattle), ihre Köpfe nicht durch die geraden bzw. V-förmigen Öffnungen stecken können, da die halbwüchsigen Tiere den Kopf nicht weit genug heben können, um einen ausrreichend großen Querschnitt der Öffnung, der weiter oben liegt, zu erreichen.

Falls der Boden, auf dem die Tiere beim Fressen stehen, zu tiefgründig wird und sie den Kopf nicht mehr weit genug heben können, um einen genügend großen Querschnitt der Öffnung zu erreichen, können diese Tiere kein Futter aufnehmen. Es ist vorgekommen, dass auf tiefgründigen Boden das Tier noch seinen Kopf hoch genug heben konnte, um zum Futter zu gelangen, aber während des Fressens tiefer eingesunken ist und nachher nicht mehr in der Lage war den Kopf hoch genug zu heben, um die Öffnung zu verlassen und in der Raufe gefangen war.

Wenn ein Tier aus irgendeinem Grund beim Fressen zusammenbrechen sollte, rutscht der Kopf in der bekannten V-förmigen Öffnung nach unten und ist gefangen. In solchen Fällen kann es zu einer Strangulierung kommen.

Wenn sich ein kleines und damit rangniedriges Tier in einem Freßplatz befindet, der von einem großen und ranghohen Tier belegt werden möchte, so drückt oft das große Tier von oben mit dem Kopf in den Freßplatz hinein, um das kleinere Tier zu verjagen und dieses ist dann eingesperrt. Das hat zur Folge, dass das kleinere Tier die Raufe meidet und so nicht die maximale Menge an Futter aufnehmen kann und es zu schlechteren Leistungen kommt. Dieses Problem verschärft sich, da Futterraufen zunehmend dazu verwendet werden sehr unterschiedlich große Tiere (Stier, Mutterkühe und Kälber) gleichzeitig zu versorgen.

Ausgehend von diesem Stand der Technik ist es die Aufgabe der vorliegenden Erfindung, eine Fütterungseinheit zu schaffen, die es insbesondere halbwüchsigen Tieren erlaubt, problemlos die Fütterungseinheit zu nutzen, d.h. zu Fressen und die es allen Tieren erlaubt, auch in einer Notsituation den Kopf aus der Öffnung befreien zu können.

Diese Aufgabe wird gelöst durch eine Fütterungseinheit mit den Merkmalen des Patentanspruchs 1.

Vorteilhafte Ausgestaltungen hiervon sind in den weiteren Patentansprüchen angegeben.

Durch die erfindungsgemäße Ausbildung der Fütterungseinheit, mit einer Trennfläche, die zwischen dem Tier (-bereich) und dem Futter (-bereich) vorgesehen ist, um Futterverluste und Futterverschmutzung möglichst zu vermeiden, die mit Öffnungen ausgestattet sind, die unten breiter sind, ist es auch kleinen, halbwüchsigen Tieren ermöglicht, den Kopf zum Futter zu strecken und jederzeit auch wieder zu verlassen.

Diese Verbreiterung der Öffnung wird im folgenden auch als Zugang bezeichnet - durch diesen Zugang können die Tiere den Kopf und den Hals in die Fütterungseinheit stecken bzw. wieder herausnehmen.

Auch in einer Notsituation, sollte ein Tier beispielsweise einen Schwächeanfall erleiden, kann jedes Tier, welches den Kopf in der Fütterungseinheit hat, den Kopf durch die untenliegende Verbreiterung der Öffnung jederzeit wieder herausziehen.

Sinken die Tiere während des Fressens an der Fütterungseinheit in den weichen, tiefgründigen Boden ein, so können die Tiere die erfindungsgemäße Fütterungseinheit trotzdem jederzeit gefahrlos und verletzungsfrei verlassen.

Vorzugsweise haben die Abgrenzungen eine Verbreiterung, um den Querschnitt der Öffnung einzuengen. Die Verbreiterung ist vorzugsweise derart vorzusehen, dass die Öffnung im mittleren Bereich enger ist als im unteren und oberen Bereich der Öffnung.

Die Trennfläche kann in der Draufsicht bevorzugt eine Linie, kreisförmig, elliptisch, rechteckig oder als Linienzug ausgebildet sein.

Durch den erfindungsgemäßen unteren Zugang können zum Beispiel Kälber direkt zum Futter. Dies gilt insbesondere für Kälber, die körperlich noch klein sind, aber genetisch bedingt bereits große Hörner haben (zum Beispiel die Rassen Salers und Highland Cattle). Hier kann es, beispielsweise nach ergiebigen Regenfällen, vorkommen, dass Tiere während der Nahrungsaufnahme so tief in den aufgeweichten Boden einsinken, dass sie den oberen Zugang bzw. Ausgang nicht mehr erreichen können. Durch den erfindungsgemäßen unteren Zugang bzw. Ausgang ist ein Verlassen der Fütterungseinheit auch unter diesen Bedingungen jederzeit möglich.

Hervorzuheben ist, dass es bei der erfindungsgemäßen Fütterungseinheit keine Einrichtung zum Fixieren der Tiere gibt; das ist ein wesentlicher Unterschied zu sogenannten Fangfreßgittern, bei denen die Tiere im Stall - wie die Bezeichnung bereits aussagt - festgehalten werden, und zwar derart, dass die Tiere den Kopf nicht mehr aus dem Fangfreßgitter heraus bewegen können, solange dieses verriegelt ist.

Die vorstehende Aufgabe, die Merkmale und Vorteile nach der vorliegenden Erfindung können unter Berücksichtigung der folgenden, detaillierten Beschreibung der bevorzugten Ausführungsformen der vorliegenden Erfindung und unter Bezugnahme auf die zugehörigen Zeichnungen besser verstanden werden.

Die Erfindung wird im folgenden anhand der Zeichnungen näher erläutert. Diese zeigen in:
Fig. 1 eine erste bevorzugte Ausführungsform der erfindungsgemäßen Fütterungseinheit in einer schematischen Darstellung;
Fig. 2 eine zweite bevorzugte Ausführungsform der erfindungsgemäßen Fütterungseinheit in einer schematischen Darstellung;
Fig. 3 eine dritte bevorzugte Ausführungsform der erfindungsgemäßen Fütterungseinheit in einer schematischen Darstellung;
Fig. 4 die erste bevorzugte Ausführungsform in einer fotografischen Darstellung;
Fig. 5 die erfindungsgemäße Fütterungseinheit in der Draufsicht;
Fig. 6 eine schematische Seitenansicht eines erwachsenen Tieres, welches den Kopf durch die Öffnung der Futterraufe gesteckt hat;
Fig. 7 eine perspektivische Gesamtansicht einer erfindungsgemäßen Fütterungseinheit nach der Figur 4; und
Fig. 8 eine Detailansicht der Fütterungseinheit nach der Figur 7.

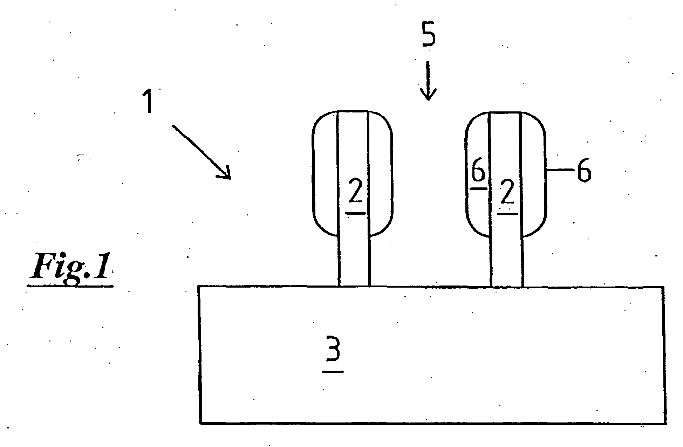

Eine erste bevorzugte Ausführungsform der vorliegenden Erfindung ist in der Figur 1 dargestellt. Eine Futterraufe 1, die lediglich ausschnittsweise und schematisch in der Vorderansicht dargestellt ist, umfasst eine Basis 3, die auf den Boden gestellt wird. Oberhalb der Basis 3 schließen sich Abgrenzungen 2 an - in der Figur 1 sind beispielhaft zwei Abgrenzungen 2 dargestellt - die Abtrennungen für zu fütternde Tiere ausbilden, die die Köpfe in Öffnungen 5 zwischen je zwei benachbarten Abgrenzungen 2 hindurch stecken können, um an das Futter zu gelangen, welches in der Futterraufe 1 vorhanden ist.

Die Abgrenzungen 2 sind mit Verbreiterungen 6 versehen, so dass die Öffnungen 5 keine gleichmäßige Öffnungsbreite über die gesamte Höhenerstreckung aufweisen, sondern jede Öffnung 5 zumindest einen verengten und erweiterten Abschnitt aufweist.

In der in der Figur 1 gezeigten Ausführungsform gibt es einen unteren Bereich der Öffnung 5, der deutlich breiter ist als der darüber liegende Bereich, der durch die Verbreiterungen 6 der Abgrenzungen 2 entsprechend eingeengt ist.

Die Tiere können zur Futteraufnahme den Kopf und den Hals durch den unten liegenden, breiteren Bereich der Öffnung 5 in die Futterraufe 1 einführen und nach dem Fressen den Kopf durch diesen Abschnitt der Öffnung 5 leicht wieder heraus ziehen. Dies gilt gleichermaßen für kleingewachsene, beispielsweise junge Kälber, Tiere als auch für ausgewachsene Tiere. Die erwachsenen Tiere können den Kopf wahlweise auch nach oben aus der Öffnung 5 herausführen.

Gemäß dem Kerngedanken nach der vorliegenden Erfindung ist jedoch der untere Zugang in der Öffnung 5 das wesentliche Element, welches einem kleineren Jungtier bzw. in einem Notfall jedem Tier erlaubt, jederzeit den Kopf aus der Futterraufe 1 heraus zu ziehen.

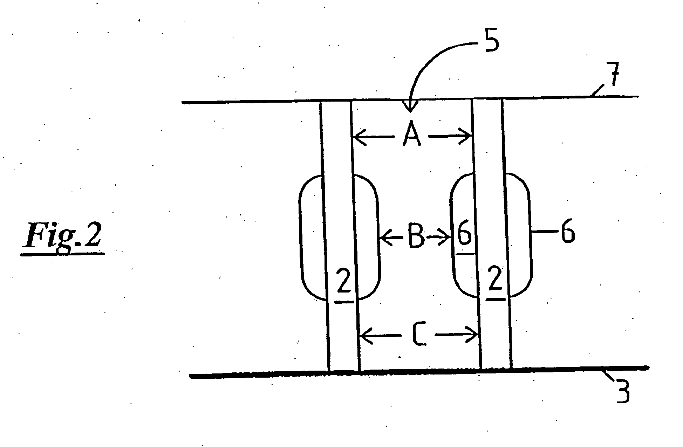

In der Figur 2 ist eine zweite bevorzugte Ausführungsform nach der vorliegenden Erfindung schematisch und ähnlich der Figur 1 dargestellt. Gleiche Bezugszeichen sind für gleiche oder gleichwirkende Bauteile bzw. Elemente verwendet. Bei der zweiten Ausführungsform einer erfindungsgemäßen Fütterungseinheit ist die Öffnung 5 ebenfalls durch Verbreiterungen 6 an den Abgrenzungen 2 eingeengt, und zwar dermaßen, dass es einen mittleren Bereich B gibt, der eine deutlich engere Öffnung hat als die beiden benachbarten, jeweils oberhalb und unterhalb der mittleren Bereichs B vorgesehenen, unteren Bereiche C und oberen Bereiche A.

Mit anderen Worten ausgedrückt, ist die Öffnung 5 "sanduhrförmig" in der Vorderansicht ausgebildet, d.h., dass der Bauch bzw. der mittlere Bereich B der Öffnung 5 gegenüber dem oberen Bereich A und gegenüber dem unteren Bereich C eingeengt bzw. eingeschnürt ausgebildet ist.

Zwischen unterem und oberem Zugang sollte die Öffnung 5 schmal sein, damit erwachsene Tiere den Freßplatz nur durch eine Kopfbewegung verlassen können. Dadurch frisst das Tier meistens über dem Futter, was zu geringeren Futterverlusten führt. Durch das seltenere Verlassen der Heuraufe erhöht sich auch die Friedfertigkeit der nebeneinander stehenden Tiere in der erfindungsgemäßen Fütterungseinheit.

Es ergibt sich wieder der erfindungsgemäße untere Zugang für das Tier und auch der obere Zugang über den oberen Bereich A ist vorhanden. Um die Stabilität der Futterraufe 1 zu erhöhen, ist oberhalb des oberen Bereichs A und am oberen Ende der Abgrenzungen 2 ein Querbalken 7 vorgesehen, der die Abgrenzungen 2 miteinander verbindet.

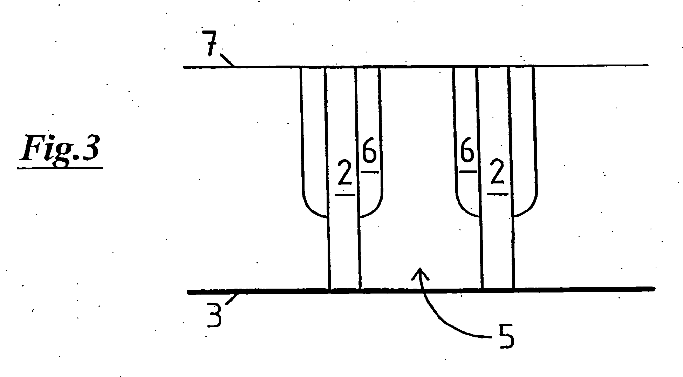

In der Figur 3 ist eine dritte bevorzugte Ausführungsform nach der vorliegenden Erfindung dargestellt. Ähnlich wie in der Figur 2 sind auch hier Abgrenzungen 2 an einer Basis 3 vorgesehen, die sich nach oben erstrecken und mittels Verbreiterungen 6 bewirken, dass eine zwischen den Abgrenzungen 2 vorhandene Öffnung 5 eine bereichsweise Verengung erfährt. In der Figur 3 ist der untere Zugang durch die breitere Öffnung 5 vorgesehen, die im oberen Bereich deutlich enger ausgebildet ist. Die Tiere können den Kopf durch den unteren Zugang in die Futterraufe 1 stecken und wieder herausziehen. Auch bei dieser Ausführungsform sind am oberen Ende der Abgrenzungen 2 Querbalken 7 vorgesehen, die die Abgrenzungen 2 miteinander verbinden.

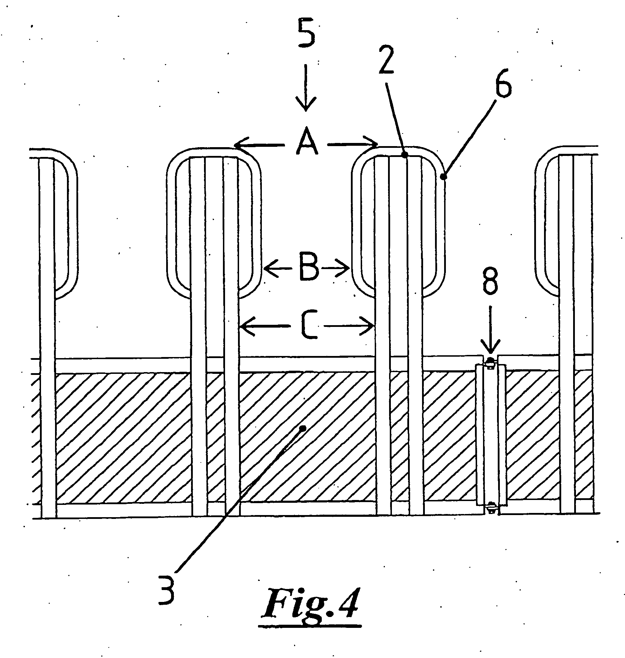

In der Figur 4 ist eine fotografische Darstellung einer erfindungsgemäßen Fütterungseinheit gezeigt. Die dort gezeigte Fütterungseinheit entspricht im wesentlichen der ersten bevorzugten Ausführungsform nach der Figur 1. An der Basis 3 sind die Abgrenzungen 2 nach oben überstehend ausgebildet. Die Abgrenzungen 2 und die obere Begrenzung der Basis 3 ist aus einer Rohrkonstruktion aus verzinktem Stahl hergestellt. Die Basis 3 kann eine umlaufende mantelförmige Blechwand aufweisen. Die nach oben über die Basis 3 überstehenden Abgrenzungen 2 sind abgerundet ausgebildet, um die Verletzungsgefahr für die Tiere zu minimieren. Jede Abgrenzung 2 ist in der gezeigten Ausführungsform aus zwei senkrechten Rohren gebildet sowie ein dünneres weiteres Rohr in etwa U-förmig gebogen ist und mit den freien Schenkeln nach unten zeigend auf die oberen Ende der senkrechten Rohre mit der Basis der U-Form geschweißt ist. Die nach unten weisenden freien Schenkel der U-Form sind seitlich an die senkrechten Rohre heran gebogen und dort ebenfalls verschweißt, so dass sich eine sehr stabile Abgrenzung ergibt, die über abgerundete Kanten verfügt, so dass sich die Tiere nicht verletzen können, wenn diese den Kopf durch die Öffnungen 5 stecken.

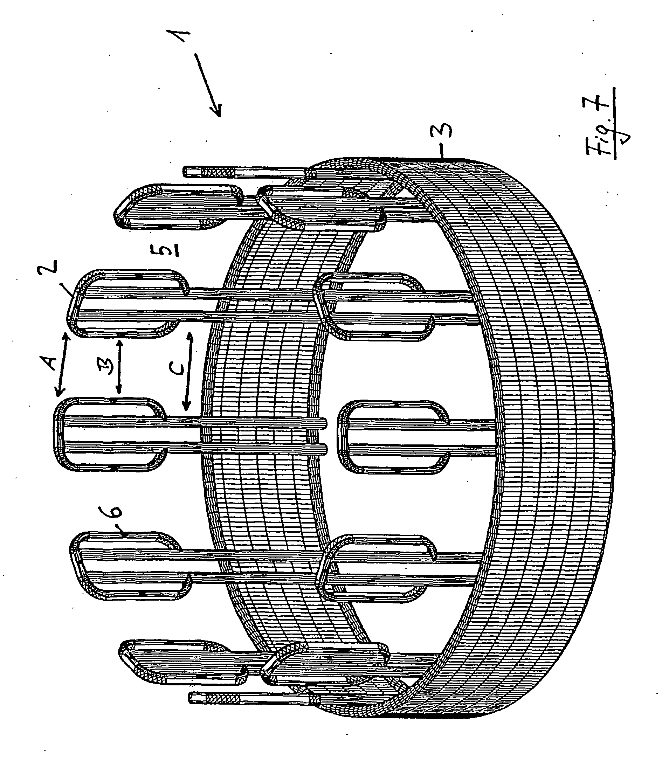

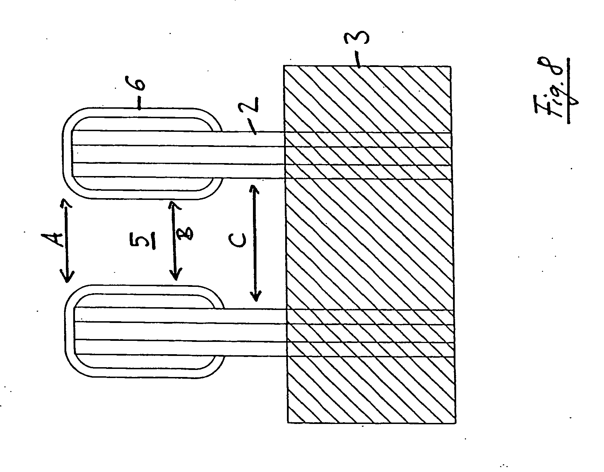

Auch bei der in der Figur 4, 7 und 8 gezeigten Ausführungsform ist die Öffnung 5 derart ausgebildet, dass ein mittlerer Bereich B vorgesehen ist, der enger ist als die beiden benachbarten Bereiche A und C. Der untere Bereich C bildet den unteren Zugang für das Tier und der obere Bereich A bildet den oberen Zugang für das Tier.

Für die konstruktive Ausführung der erfindungsgemäßen Fütterungseinheit sind verschiedene Rohre, zum Teil gebogen, Bleche und Flacheisen notwendig. Als Verbindung einzelner Bauteile wird vorzugsweise Schweißen verwendet. Eine aus dem Stand der Technik bekannte Feuerverzinkung gegen Korrosion ist ebenfalls zu empfehlen.

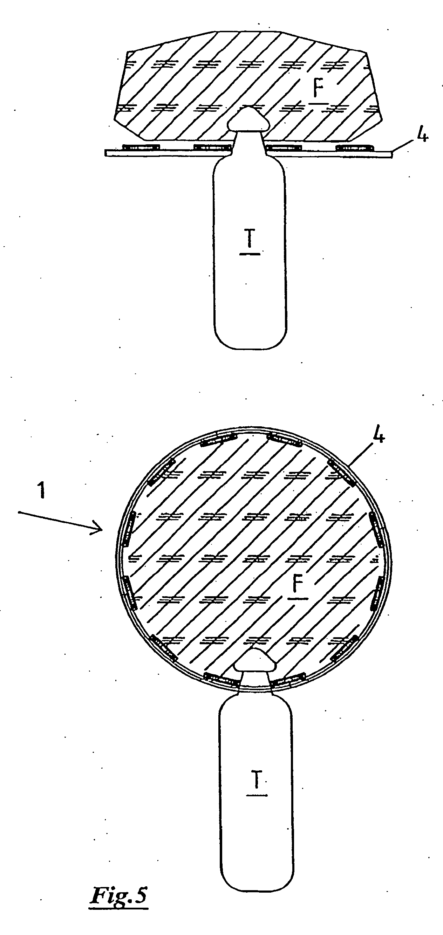

Die Fütterungseinheit kann mehrteilig ausgeführt sein, um die Handhabung zu erleichtern. In der Figur 4 ist eine entsprechende Trennstelle 8 gezeigt. Die dann mehreren Teile einer erfindungsgemäßen Futterraufe 1 können an den Trennstellen 8 zusammengesetzt und aneinander fixiert werden. Beispielsweise kann eine in der Draufsicht kreisrunde Futterraufe 1, wie in der Figur 5 gezeigt, aus zwei, drei oder vier Abschnitten bestehen, die sich dann jeweils über 180°, 120° oder 90° des Kreisumfangs erstrecken.

In der Figur 5 ist die Art und Weise des Einsatzes einer erfindungsgemäßen Fütterungseinheit gezeigt; es sind zwei Formen der Futterraufe 1 dargestellt. In der oberen Darstellung eine nur ausschnittsweise gezeigte, gerade Futterraufe 1, die eine Trennfläche 4 zwischen dem Futter F und dem Tier T darstellt. Das Tier T kann seinen Kopf und seinen Hals in eine Öffnung (in der Figur 5 nicht dargestellt) stecken, um an das Futter F zu gelangen. Ebenso ist es in der unteren Abbildung: dort ist eine kreisrunde Futterraufe 1 dargestellt, die die in der Draufsicht kreisrunde Trennfläche 4 zwischen dem Futter F und dem Tier T ausbildet.

Erfindungsgemäß können auch kleinwüchsige Tiere, wie Kälber direkten Zugang zum Futter erhalten. Besonders vorteilhaft ist die Erfindung bei einem Einsatz der Futterraufe 1 auf nicht befestigtem Boden oder gar einem aufgeweichten Boden, in dem die Tiere mit den Beinen einsinken. In einem solchen Fall könnten die Tiere den oberen Zugang bzw. Ausgang - wie er im Stand der Technik üblich ist - nicht mehr erreichen. Der erfindungsgemäße untere Zugang bzw. Ausgang ermöglicht den Tieren unter allen Umständen ein einfaches Verlassen der Fütterungseinheit.

Gerade halbwüchsige Tiere kommen bei den bekannten Raufen unten nicht mehr mit dem Kopf in die Fütterungseinheit hinein oder heraus und haben aber oft noch nicht die körperliche Größe den Kopf von oben in den Freßplatz zu bringen. Da halbwüchsige Tiere einen besonders hohen Futterbedarf haben, weil sie wachsen sollen und wollen, sind diese bei bisher bekannten Fütterungseinheiten benachteiligt. Bei der erfindungsgemäßen Fütterungseinheit haben auch solche Tiere einfachere Zugangs- und noch wichtiger Fluchtmöglichkeiten.

Die beschriebenen Fütterungseinheiten werden sehr oft auf der Weide verwendet, wo, wenn ein Tier Probleme hat und durch Schreien auf sich aufmerksam machen möchte, es nicht gehört wird. Gerade bei einer Anwendung auf der Weide ist daher der Sicherheitsaspekt größer und wichtiger als bei einer Anwendung im Stall, d.h. in der Nähe von Menschen, die gegebenenfalls helfend eingreifen können.

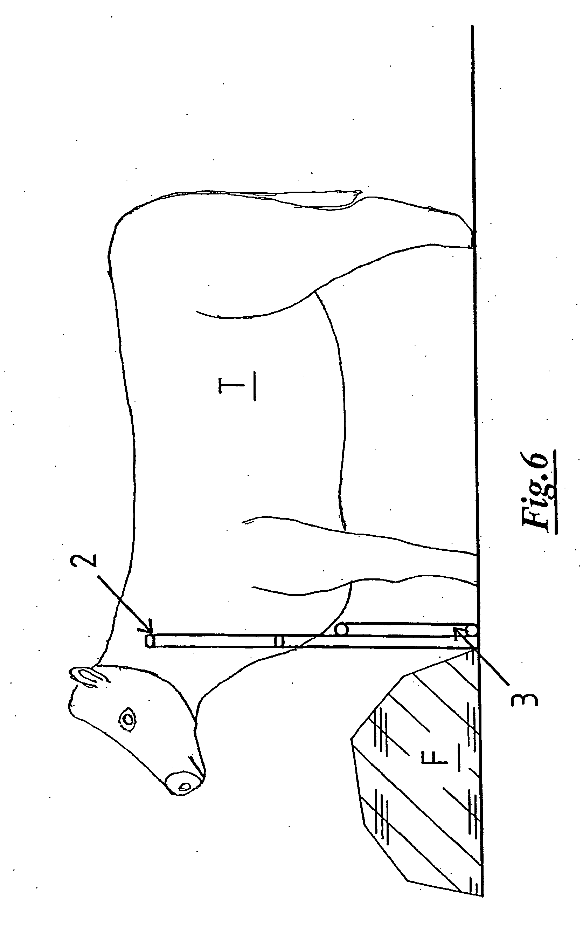

In der Figur 6 ist eine Seitenansicht eines erwachsenen Tieres T gezeigt, welches den Kopf durch die Öffnung zwischen den Abgrenzungen 2 gesteckt hat, um an das Futter F zu gelangen. Die Größenverhältnisse sind anhand der Figur 6 gut zu erkennen. Die Abgrenzungen 2 sind niedriger als der Widerrist des erwachsenen Tieres T, damit der Kopf einfach über die Abgrenzungen 2 gehoben werden kann.

Kurz zusammengefaßt, weist eine erfindungsgemäße Fütterungseinheit, die insbesondere für Rinder, Pferde, Schafe, Ziegen, Wild und andere Tiere vorgesehen ist, eine Futterraufe 1 mit mehreren Abgrenzungen 2 auf, die sich von einer Basis 3 nach oben erstrecken, wobei die Futterraufe 1 eine Trennfläche 4 zwischen einem Futter F und dem zumindest einen Tier T ausbildet, wobei die Trennfläche 4 eine Öffnung 5 oder eine Mehrzahl an Öffnungen 5 derart aufweist, dass das Tier T seinen Kopf von unten einführen und auch herausnehmen kann. Vorzugsweise haben die Abgrenzungen 2 in der Vorderansicht der Fütterungseinheit eine Verbreiterung 6 derart, dass die Öffnung 5 bereichsweise verengt ist. Besonders bevorzugt ist jede Öffnung 5 im unteren Bereich C und/oder im oberen Bereich A breiter als im mittleren Bereich B.

Hinsichtlich vorstehend im einzelnen nicht näher erläuterter Merkmale der Erfindung wird in übrigen ausdrücklich auf die Patentansprüche und die Zeichnungen verwiesen.

### Bezugszeichenliste

- 1: Futterraufe
- 2: Abgrenzung
- 3: Basis
- 4: Trennfläche
- 5: Öffnung
- 6: Verbreiterung
- 7: Querbalken
- 8: Trennstelle

- A: oberer Bereich
- B: mittlerer Bereich
- C: unterer Bereich
- F: Futter
- T: Tier

## Patentansprüche

1. Fütterungseinheit, insbesondere für Rinder, Pferde, Schafe, Ziegen, andere Weidetiere und Wild, mit einer Futterraufe (1) mit mehreren Abgrenzungen (2), die sich von einer Basis (3) nach oben erstrecken, so dass zumindest eine Öffnung (5) ausgebildet ist, wobei die Futterraufe (1) eine Trennfläche (4) zwischen einem Futter (F) und dem zumindest einen Tier (T) ausbildet, **dadurch gekennzeichnet, dass** jede Öffnung (5) im unteren Bereich (C) breiter ist als im mittleren Bereich (B), so dass das Tier (T) seinen Kopf von unten in die Öffnung (5) einführen und herausnehmen kann.

2. Fütterungseinheit nach Anspruch 1, **dadurch gekennzeichnet, dass** die Öffnungen (5) durch die feststehenden Abgrenzungen (2) voneinander getrennt sind.

3. Fütterungseinheit nach einem der Ansprüche 1 oder 2, **dadurch gekennzeichnet, dass** die Abgrenzungen (2) in der Seitenansicht der Fütterungseinheit eine Verbreiterung (6) derart aufweisen, dass die Öffnung (5) im mittleren Bereich (B) bereichsweise verengt ist.

4. Fütterungseinheit nach einem der Ansprüche 1 bis 3, **dadurch gekennzeichnet, dass** jede Öffnung (5) im oberen Bereich (A) breiter ist als im mittleren Bereich (B).

5. Fütterungseinheit nach einem der Ansprüche 1 bis 4, **dadurch gekennzeichnet, dass** der untere Bereich (C) der Öffnung (5) so ausreichend breit ausgebildet ist, dass das Tier (T) in einer Notfallsituation den Kopf jederzeit aus der Öffnung (5) herausziehen kann.

6. Fütterungseinheit nach einem der Ansprüche 1 bis 5, **dadurch gekennzeichnet, dass** die Trennfläche (4) in der Draufsicht der Fütterungseinheit eine Linie, kreisförmig, elliptisch, als Linienzug oder rechteckig ausgebildet ist.

7. Verwendung der Fütterungseinheit nach einem der Ansprüche 1 bis 6 als festes Freßgitter.

8. Verwendung der Fütterungseinheit nach einem der Ansprüche 1 bis 7 auf unbefestigtem Grund.

9. Verwendung nach Anspruch 8, **dadurch gekennzeichnet, dass** der unbefestigte Grund eine Wiese oder Weide ist.

10. Verwendung der Fütterungseinheit nach einem der Ansprüche 7 bis 9 für Kälber und sonstiges Jungvieh.

11. Verwendung der Fütterungseinheit nach Anspruch 10, wobei kleine Tiere in normaler Kopfhaltung den Kopf durch den unteren Bereich (C) der Öffnung (5) stecken können, um zum Futter (F) zu gelangen.

12. Verwendung der Fütterungseinheit nach einem der Ansprüche 7 bis 11 für das gleichzeitige Füttern von unterschiedlich großen Tieren, so dass ein kleineres Tier die Öffnung (5) durch Herausziehen des Kopfes aus dem unteren breiteren Bereich (C) verlassen kann, während ein größeres Tier seinen Kopf von oben durch den Bereich (A) in die Öffnung (5) einführt.

## Claims

1. Feeding unit, in particular for cattle, horses, sheep, goats, other pasture animals and game, having a feeder (1) with a plurality of divisions (2) which extend upwards from a base (3), so that at least one opening (5) is formed, the feeder (1) forming a dividing surface (4) between fodder (F) and the at least one animal (T), **characterized in that** each opening (5) is wider in the lower region (C) than in the central region (B), so that the animal (T) is able to introduce its head into the opening (5) and withdraw it from below.

2. Feeding unit according to Claim 1, **characterized in that** the openings (5) are separated from one another by the fixed divisions (2).

3. Feeding unit according to either of Claims 1 and 2, **characterized in that**, in the side view of the feeding unit, the divisions (2) have a widened portion (6) such that the opening (5) is locally narrowed in the central region (B).

4. Feeding unit according to one of Claims 1 to 3, **characterized in that** each opening (5) is wider in the upper region (A) than in the central region (B).

5. Feeding unit according to one of Claims 1 to 4, **characterized in that** the lower region (C) of the opening (5) is designed to be sufficiently wide that, in an emergency situation, the animal (T) can withdraw its head from the opening (5) at any time.

6. Feeding unit according to one of Claims 1 to 5, **characterized in that**, in the plan view of the feeding unit, the dividing surface (4) is designed as a line, circle, ellipse, as a continuous series of lines or a rectangle.

7. Use of the feeding unit according to one of Claims 1 to 6 as a fixed feed fence.

8. Use of the feeding unit according to one of Claims 1 to 7 on unpaved ground.

9. Use of the feeding unit according to Claim 8, **characterized in that** the unpaved ground is a meadow or pasture.

10. Use of the feeding unit according to one of Claims 7 to 9 for calves and other young livestock.

11. Use of the feeding unit according to Claim 10, it being possible for small animals with normal head posture to stick their heads through the lower region (C) of the opening (5) in order to reach the fodder (F).

12. Use of the feeding unit according to one of Claims 7 to 11 for the simultaneous feeding of animals of different sizes, so that a smaller animal can leave the opening (5) by pulling its head out of the lower, wider region (C) while a larger animal is introducing its head into the opening (5) from above through the region (A).

## Revendications

1. Unité d'affouragement, en particulier pour bovins, équins, ovins, caprins, autres animaux à la pâture et animaux sauvages, comportant un râtelier à fourrage (1) avec plusieurs délimitations (2) qui s'étendent vers le haut à partir d'une base (3), si bien qu'au moins une ouverture (5) est formée, le râtelier à fourrage (1) formant une surface de séparation (4) entre un fourrage (F) et au moins un animal (T), **caractérisée par le fait que** chacune des ouvertures (5) est plus large dans la partie basse (C) que dans la partie centrale (B), si bien que l'animal (T) peut introduire et extraire la tête dans l'ouverture (5) par le bas.

2. Unité d'affouragement selon la revendication 1, **caractérisée par le fait que** les ouvertures (5) sont séparées les unes des autres par des délimitations (2) fixes.

3. Unité d'affouragement selon l'une des revendications 1 et 2, **caractérisée par le fait que** les délimitations (2), observées sur une vue de côté de l'unité d'affouragement, présentent un élargissement (6) tel que l'ouverture (5) est rétrécie par zones dans la partie centrale (B).

4. Unité d'affouragement selon l'une des revendications 1 à 3, **caractérisée par le fait que** chaque ouverture (5) est plus large dans la partie haute (A) que dans la partie centrale (B).

5. Unité d'affouragement selon l'une des revendications 1 à 4, **caractérisée par le fait que** la partie basse (C) de l'ouverture (5) est configurée avec une largeur suffisante pour que l'animal (T) puisse à tout moment retirer la tête de l'ouverture (5) dans une situation d'urgence.

6. Unité d'affouragement selon l'une des revendications 1 à 5, **caractérisée par le fait que** la surface de séparation (4), observée sur une vue en plan de l'unité d'affouragement, forme une ligne circulaire, elliptique, polygonale ou carrée.

7. Utilisation de l'unité d'affouragement selon l'une des revendications 1 à 6 sous la forme d'un râtelier à demeure.

8. Utilisation de l'unité d'affouragement selon l'une des revendications 1 à 7 sur un sol non consolidé.

9. Utilisation selon la revendication 8, **caractérisée par le fait que** le sol non consolidé est une prairie ou une pâture.

10. Utilisation de l'unité d'affouragement selon l'une des revendications 7 à 9 pour veaux et autres jeunes animaux.

11. Utilisation de l'unité d'affouragement selon la revendication 10, dans laquelle les petits animaux, dans une position normale de la tête, peuvent introduire la tête dans la partie basse (C) de l'ouverture (5) pour atteindre le fourrage (F).

12. Utilisation de l'unité d'affouragement selon l'une des revendications 7 à 11 pour le nourrissage simultané d'animaux de taille différente, si bien qu'un petit animal peut quitter l'ouverture (5) en sortant la tête par la partie basse plus large (C) tandis qu'un animal plus grand introduit la tête par le haut dans la partie (A) de l'ouverture (5).
